# EUROPÄISCHE PATENTSCHRIFT

(11) **EP 2 100 117 B1**
(45) Veröffentlichungstag und Bekanntmachung des Hinweises auf die Patenterteilung: **08.02.2017**
(21) Anmeldenummer: 07857119.7
(22) Anmeldetag: 22.12.2007
(51) Int. Cl.: G01M 1/32

(54) **VERFAHREN UND VORRICHTUNG ZUM UNWUCHTAUSGLEICH VON FAHRZEUGRÄDERN**
METHOD AND DEVICE FOR COMPENSATING UNBALANCES OF VEHICLE WHEELS
PROCÉDÉ ET DISPOSITIF POUR COMPENSER UN DÉSÉQUILIBRE DES ROUES D'UN VÉHICULE

(30) Priorität: 02.01.2007 DE 102007001312
(43) Veröffentlichungstag der Anmeldung: 16.09.2009
(73) Patentinhaber: Schenck RoTec GmbH, 64293 Darmstadt (DE)
(72) Erfinder: ROGALLA, Martin, 64297 Darmstadt (DE); THELEN, Dieter, 64397 Modautal (DE)
(74) Vertreter: Haar, Lucas Heinz Jörn
(86) Internationale Anmeldenummer: PCT/EP2007/011414
(87) Internationale Veröffentlichungsnummer: WO 2008/080597

(56) Entgegenhaltungen:
- DE-A1- 19 922 085
- DE-A1- 19 961 828
- US-A1- 2006 076 359

## Beschreibung

Die Erfindung betrifft ein Verfahren zum Unwuchtausgleich von Fahrzeugrädern gemäß dem Oberbegriff des Patentanspruchs 1 sowie eine Vorrichtung zur Durchführung des Verfahrens gemäß dem Oberbegriff des Patentanspruchs 9.

Beim Auswuchten von rotierenden Körpern wird zunächst während eines Probelaufs die Unwucht festgestellt und daraufhin meist in einer weiteren separaten Vorrichtung an den ermittelten Ausgleichsstellen ein entsprechender Materialabtrag durch Fräsen oder Bohren vorgenommen oder entsprechende Ausgleichsgewichte in den vorgegebenen Ausgleichsebenen befestigt.

Beim Auswuchten von Fahrzeugrädern werden die festgestellten Unwuchten allerdings nur durch die Befestigung von Ausgleichsgewichten an den Felgen bzw. Scheibenrädern ausgeglichen, da ein Materialabtrag dort ausscheidet. Dazu werden bei Stahlfelgen die Augleichsgewichte noch meist am innenliegenden und außenliegenden Felgenhorn der entsprechenden Ausgleichsstellen festgeklemmt, wozu vorgefertigte Gewichte in abgestuften Gewichtsgrößen vorgesehen sind. Wegen der Vielzahl der Gewichtsstufen und dem genauen Aufsetzen der Gewichtsklammern, wird ein derartiges Auswuchten auch beim industriellen Herstellen von neuen Fahrzeugrädern noch weitgehend manuell durchgeführt.

Bei Neufahrzeugen werden derzeit aus Gewichtsgründen und wegen der optischen Gestaltung häufig bevorzugt Fahrzeugräder mit Leichtmetallfelgen eingesetzt, wobei die Ausgleichsgewichte meist in der Felgenschüssel in zwei axial voneinander entfernten Ausgleichsebenen angeklebt werden. Dazu sind zum Teil automatisierte Auswuchtverfahren bekannt, die den Auswuchtvorgang erheblich beschleunigt haben.

Ein Verfahren und eine Vorrichtung zum Anbringen von Unwuchtausgleichsgewichten an ein Fahrzeugrad mit einer programmgesteuerten Handhabungsvorrichtung in Form eines Roboters ist bereits aus der DE 199 61 828 B4 bekannt. Dabei wird ein von einer Zuförderlinie herantransportiertes auszuwuchtendes Fahrzeugrad von einem Industrieroboter erfasst und um seine Radachse in eine Ausgleichsposition gedreht und dabei einem ersten Gewichteeinsatzwerkzeug für die erste Ausgleichsebene zugeführt. Diesem Gewichteeinsatzwerkzeug wurden zuvor offensichtlich Klebegewichtselemente in der ermittelten Gewichtsklasse manuell übergeben, vorher die Schutzfolie abgezogen und dann das erste Ausgleichsgewicht durch das erste Gewichteeinsatzwerkzeug in der vorgesehenen ersten Ausgleichsebene angebracht. Anschließend erfasst der Roboter das Rad erneut und transportiert es an ein zweites Gewichteeinsatzwerkzeug für die zweite Ausgleichsebene, wobei in gleicher Art und Weise das zweite Ausgleichsgewicht an der ermittelten Ausgleichsfläche angeklebt oder angeschlagen wird. Dieses teilautomatisierte Verfahren wird hauptsächlich dazu eingesetzt, in einer Auswuchtlinie sowohl Fahrzeugräder mit Klebegewichten als auch Fahrzeugräder mit Schlaggewichten ohne Umrüstarbeiten anbringen zu können. Durch dieses Verfahren ist dabei lediglich die Zuführung und das Eindrehen der Räder in die ermittelte Winkellage automatisiert, so dass die Taktzeit maßgeblich von der Geschwindigkeit abhängt, mit der die ermittelten Einzelgewichtsstufen ausgesucht und dem Gewichteeinsatzwerkzeug übergeben und anschließend angebracht werden können.

Aus der DE 100 06 176 A1 ist allerdings ausschließlich eine Vorrichtung zum Befestigen von Ausgleichsgewichten mit einer Klebeschicht vorbekannt, bei der aber die Anklebung weitgehend automatisch erfolgt. Dazu ist eine Führungseinrichtung vorgesehen, die einen abgewinkelten Arm enthält, der in die Scheibenrad- bzw. Felgenschüssel hineinragt und an dessen vorderen Ende ein Andruckelement befestigt ist. Zum Auswuchten wird zunächst ein Klebegewicht mit entsprechend abgestuftem Gewichtswert manuell an einer Halteeinrichtung des Andruckelementes eingesetzt und die Schutzfolie von der Klebeschicht entfernt. Dann erfolgt der automatisierte Anklebevorgang, in dem der Arm linear soweit in die Felgenschüssel eintaucht, bis er die vorgesehene Ausgleichsebene erreicht hat. Dann wird das Rad in die ermittelte Winkellage positioniert und durch eine radiale Armbewegung wird dann das Andruckelement mit einer vorgegebenen Kraft an die Ausgleichsstelle gedrückt. Dabei setzt das Klebegewicht mit seiner Klebefläche auf der Ausgleichsfläche in der Felgenschüssel auf und wird dort durch die Klebeverbindung befestigt. Durch die besondere Ausbildung des Andruckelements mit Blattfederelementen wird das Ausgleichsgewicht zunächst in der Mitte der Ausgleichsfläche aufgesetzt und durch Erhöhung der Andruckkraft und Verformung der Blattfederelemente auch gleichmäßig auf die konkav gekrümmte Andruckfläche in der Felgenschüssel gedrückt.

Zum Auswuchten des Fahrzeugrades in der zweiten Ausgleichsebene muss der Arm wieder linear aus der Felgenschüssel bewegt und erneut manuell mit einem vorgesehenen Ausgleichsgewicht bestückt werden, wobei der vorher beschriebene Vorgang dann nochmals wiederholt wird, um ein Fahrzeugrad vollständig auszuwuchten. Wegen konstruktiver Gegebenheit des Scheibenrades bzw. der Felge kann es auch notwendig sein in einer Ausgleichsebene mehrere Gewichte vorzusehen, wobei sich die Auswuchtzeit erheblich verlängert. Bei einer derzeit gebräuchlichen Taktzeit in der Autoindustrie von 1 Minute ist auch ein derart teilautomatisiertes Auswuchten von fünf Fahrzeugrädern pro Fertigungseinheit in einer Minute mit einer derartigen Auswuchtmaschine nicht möglich. Diese vorgegebene Taktzeit kann dann nur mit mehreren parallel angeordneten Auswuchtmaschinen oder durch eine ortsferne separate Auswuchtung der Räder erreicht werden, bei der dann aber die jeweils benötigten Radsätze bevorratet und taktgenau zugeliefert werden müssen.

Eine Auswuchtvorrichtung für Fahrzeugräder mit kurzer Taktzeit ist jedoch schon aus der DE 199 22 085 A1 bekannt. Dazu ist vorzugsweise ein programmgesteuerter Knickarmroboter vorgesehen, dessen Schwenkarm selbsttätig die Ausgleichsfläche innerhalb der Felgenschüssel ansteuert und mit einer Andrückeinrichtung die Ausgleichsgewichte radial an die konkav zylindrischen Ausgleichsflächen gleichmäßig andrückt. Die Andrückeinrichtung besteht dabei aus einer speziellen Halteeinrichtung mit zwei Klemmbacken, auf der das vorgesehene Ausgleichsgewicht zwischen zwei Haltebacken eingeklemmt ist. Durch die beiden Klemmbacken wird das Ausgleichsgewicht gleichmäßig auf die konkav gekrümmten Ausgleichsflächen innerhalb der Felgenschüssel aufgedrückt und durch die vorher von der Schutzfolie entfernte Klebefläche festgehalten.

Zum vollautomatischen Auswuchten wird das zuvor ermittelte Ausgleichsgewicht offensichtlich von einer Rolle in einer separaten Bereitstelleinrichtung abgewickelt und auf entsprechende Länge abgelängt und von der Schutzfolie befreit. Dieses Ausgleichsgewicht wird dann dem Roboterarm bzw. dessen Andrückeinrichtung übergeben, wobei es genau in den Halteeinrichtungen festgeklemmt werden muss, was eine sehr genaue Koordinierung der beiden Bewegungsabläufe erfordert. Insbesondere bei schnellen Taktzeiten und die dadurch bedingten Beschleunigungen der beiden Übergabearme sind Übergabefehler nicht ausgeschlossen, die zu längeren Fertigungsunterbrechnungen führen können.

Aus US 2006/0076359 A1 ist eine Vorrichtung zur Ausgabe eines vorbestimmten Ausgleichsgewichts zum Auswuchten eines Fahrzeugrads bekannt mit einem Applikator, der eine von einer konvexen Fläche und beiderseits derselben angeordneten Backen gebildete Aufnahme für von einem Endlosgewichtsstrang abgetrennte Einzelausgleichsgewichte aufweist. Die bekannte Vorrichtung weist ferner eine Ablängvorrichtung auf, mit der ein Ausgleichsgewicht vorgebbarer Länge in die Aufnahme des Applikators eingeführt und von dem Endlosgewichtsstrang abgetrennt werden kann. Mit Hilfe des Applikators kann das von dem Endlosgewichtsstrang abgetrennte, selbstklebende Ausgleichsgewicht durch einen Bediener an einer Ausgleichsfläche der Felge eines Fahrzeugrads angedrückt und dadurch befestigt werden.

Es ist weiterhin aus DE 100 08 393 A1 eine Vorrichtung zum Auswuchten von Fahrzeugrädern bekannt, bei der eine Andrückrolle am Ende eines Roboterarms eines handelsüblichen Montageroboters angeordnet ist. Ein abgetrenntes Auswuchtgewicht wird hierbei am Außenumfang der Andrückrolle von winkelbeweglichen Umfangsabschnitten aufgenommen, die mit Federklammern versehen sind, die in Vertiefungen oder an Vorsprüngen an dem Auswuchtgewicht einrasten um das Auswuchtgewicht zu halten und nach dem Anbringen freizugeben.

Der Erfindung liegt deshalb die Aufgabe zugrunde, ein Verfahren und eine Auswuchtvorrichtung der eingangs genannten Art zu schaffen, die in kurzen Taktzeiten eine betriebssichere automatische Befestigung selbstklebender Ausgleichsgewichte unterschiedlicher Länge an konkav gekrümmten Befestigungsflächen ermöglicht.

Diese Aufgabe wird durch die in Patentanspruch 1 und Patentanspruch 9 angegebene Erfindung gelöst. Weiterbildungen und vorteilhafte Ausführungsbeispiele dieser Erfindung sind in den Unteransprüchen angegeben.

Die Erfindung hat den Vorteil, dass durch das Aufrollen bzw. Aufwalzen der Ausgleichsgewichtselemente auf die gekrümmte Innenwand der Felgenschüssel die Ausgleichsgewichte vor dem Aufdrückvorgang nicht mit einem kleineren Krümmungsradius als dem Innenradius der Felge vorgebogen werden müssen, da ansonsten das Gewicht zuerst an den Enden festkleben würde und in der Mitte des Gewichts keine vollständige Verklebung stattfinden könnte. Da dieses Vorbiegen vor der Entfernung der Schutzfolie durchgeführt werden müsste und dabei sicherzustellen ist, dass eine elastische Zurückbiegung unterbleibt, wäre ohne einen derartigen Abrollvorgang ein zusätzlicher Arbeitsgang erforderlich, der zusätzliche Taktzeit beanspruch.

Die Erfindung hat weiterhin den Vorteil, dass durch die Zuführung eines Endlosgewichtsstrangs keine Vielzahl von gestuften Ausgleichsgewichten bevorratet und aus diesen ausgewählt werden muss. Da dieser Endlosgewichtsstrang sowohl rollenweise am Ausführungsarm angebracht oder extern zugeführt werden kann, können die Nachfüllvorgänge auf ein Minimum beschränkt werden.

Bei der Erfindung ist weiterhin von Vorteil, dass die Abtrennung der Ausgleichsgewichte unmittelbar vor oder während dem Befestigungsvorgang erfolgt, so dass die einzelnen Gewichtsabschnitte auch erst kurz vor dem Aufwalzvorgang von der Schutzfolie befreit werden können, wodurch die maximale Klebewirkung durch den kurzzeitig nachfolgenden Aufklebevorgang erhalten bleibt und eine dadurch lange und hohe Haftfähigkeit gewährleistet wird.

Eine besondere Ausführung der Erfindung hat den Vorteil, dass durch die Zuführung des Endlosgewichtsstrangs mit einem Ausführungsarm einer programmgesteuerten Handhabungsvorrichtung bis in die Felgenschüssel keine zeitaufwendige Rückführung des Auswuchtkopfes erforderlich ist, so das beide Ausgleichsebenen durch einen einzigen Eintauchbewegungsvorgang ausgewuchtet werden können. Dadurch ist es vorteilhafterweise möglich, innerhalb der üblichen Fertigungstaktzeit im PKW-Herstellungsprozess einen kompletten Radsatz mit bis zu fünf Fahrzeugrädern vollautomatisch auszuwuchten. Dabei ist insbesondere von Vorteil, dass die Gewichtszuführung, die Positionierung an der Ausgleichsfläche, die Abtrennung der Ausgleichsgewichte und die Befestigung durch einen Aufwalzvorgang in einem koordinierten zusammenhängenden Bewegungsablauf erfolgt, so dass eine Optimierung der Auswuchtzeit erreichbar ist, ohne dass der Auswuchtvorgang durch Übergabevorgänge erschwert würde.

Eine weitere besondere Ausführung der Erfindung hat den Vorteil, dass durch die am Auswuchtkopf vorgesehene Zuführvorrichtung, der Endlosgewichtsstrang weder am Auswuchtkopf gelagert werden muss, noch dass Einzelgewichtsabschnitte den Auswuchtkopf übergeben werden müssen. Dadurch erfolgt vorteilhafterweise eine sichere und schnelle Zuführung der Ausgleichsgewichte und es können kaum Unterbrechungen durch die Gewichtszufuhr auftreten.

Bei einer weiteren besonderen Ausführung der Erfindung ist vorteilhafterweise eine Zuführkulisse vorgesehen, durch die ohne Taktzeitverlust eine Ausgleichsgewichtumlenkung von der vertikalen Zuführung in die horizontale Befestigungslage oder umgekehrt erfolgt. Dabei ist insbesondere von Vorteil, dass die Gewichtsumlenkung unterbrechungsfrei geschieht, so dass ein Übergabefehler vermieden wird, der sonst leicht zu Unterbrechungen des Herstellungsvorgangs führen könnte.

Eine besondere Ausführung der Erfindung mit einer Aufwalzrolle hat den Vorteil, dass damit in einem kontinuierlichen Zuführungs- und Befestigungsvorgang die Ausgleichsgewichte gleichzeitig zugeführt, abgetrennt und befestigt werden können, wodurch sich die Ausführungszeit erheblich verkürzt.

Bei einer weiteren Ausführungsform der Erfindung ist vorgesehen, die Ablängvorrichtung in der Aufwalzrolle zu integrieren, wodurch sich vorteilhafterweise Ausgleichsgewichtübergabevorgänge vermeiden lassen, die zu Übergabefehlern führen könnten. Dadurch kann gleichzeitig der Abtrennvorgang in einem kontinuierlichen Zuführungs- und Befestigungsvorgang erfolgen, wobei der Abtrennvorgang vorteilhafterweise kaum zusätzliche Taktzeit erfordert.

Eine weitere besondere Ausführungsform der Erfindung mit einer kegelförmigen Aufwalzrolle hat den Vorteil, dass damit auch Scheibenräder mit einer sogenannten Hinterschneidung automatisch ausgewuchtet werden können. Bei dieser Ausführung ist zusätzlich von Vorteil, dass bei einer besonderen Form der Aufwalzrolle eine Ventilaussparung vorgesehen ist, damit auch ein in der Hinterschneidungsringfläche vorgesehenes Ventil nicht stört.

Die Erfindung wird anhand eines Ausführungsbeispiels, das in der Zeichnung dargestellt ist, näher erläutert. Es zeigen:
- Fig. 1:: ein in eine Felgenschüssel eintauchender Arm einer Handhabungsvorrichtung mit einem schematisch dargestellten Auswuchtkopf;
- Fig. 2:: eine schematische Darstellung eines Auswuchtkopfes,
- Fig. 3:: eine schematische Darstellung eines Auswuchtkopfes mit einer vor der Aufwalzrolle angeordneten Ablängvorrichtung
- Fig. 4:: eine schematische Darstellung eines Auswuchtkopfes mit einer kegelförmigen Aufwalzrolle, und
- Fig. 5:: einen ortsfesten schematisch dargestellten Auswuchtkopf, über den mit einem Arm eine Handhabungsvorrichtung ein Fahrzeugrad positioniert wird.

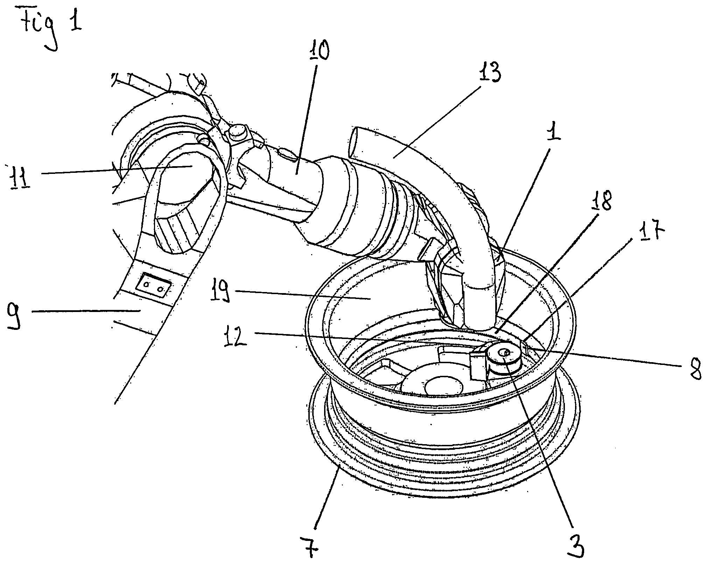

In Fig. 1 der Zeichnung ist ein Teil einer Vorrichtung zum Auswuchten von Fahrzeugrädern dargestellt, bei der an einem Ausführungsarm 10 einer Handhabungsvorrichtung 9 ein Auswuchtkopf 1 angeordnet ist, der ein flexibles Endlosgewichtsband 5 von aufklebbaren Ausgleichsgewichten 8 in dem Bereich der Ausgleichsstelle zuführt, dort von der Schutzfolie 16 befreit, über der Ausgleichsfläche 17 positioniert und dann den Endlosgewichtsstrang 5 in ermittelter Länge ablängt und auf die Ausgleichsfläche 17 aufdrückt.

Dazu wird vorzugsweise ein Ausführungsarm 10 eines sogenannten programmgesteuerten Roboters als Handhabungsvorrichtung 9 eingesetzt, dessen Bewegung in allen drei Raumachsen steuerbar ist. Es können aber auch Ausführungsarme 10 von einfacheren Handhabungsvorrichtungen 9 gewählt werden die mindestens linear in die Scheibenrad- bzw. Felgenschüssel 19 einführbar und radial zur Ausgleichsebene 18 bewegbar sind. Dabei ist es auch denkbar, dass die Winkelstellung der Auswuchtposition durch eine Raddrehung gesteuert vorgenommen wird.

Am Ausführungsarm 10 ist ein spezieller Auswuchtkopf 1 angeordnet, der die Zuführung, Ablängung und Anklebung der Ausgleichsgewichte 8 vornimmt. Der Auswuchtkopf 1 ist mindestens radial verschwenkbar am Ausführungsarm 10 befestigt. Der Ausführungsarm 10 ist an der Handhabungsvorrichtung 9 vorzugsweise insgesamt drehbar gelagert und kann durch ein weiteres Schwenklager 11 axial in die Felgenschüssel 19 bewegt werden. Der Auswuchtkopf 1 ist deshalb programmgesteuert so positionierbar, dass er die Ausgleichsgewichte 8 an jede Ausgleichsstelle 17 in den vorgegebenen Ausgleichsebenen 18 bewegen kann. Die vorgegebenen Ausgleichsebenen 18 befinden sich meist an den zylinderförmigen konkav ausgebildeten Innenflächen innerhalb der Felgenschüssel 19, die axial voneinander beabstandet sind. Die konkreten Ausgleichsstellen 17 und die Größe der Ausgleichsgewichte 8 werden von der Unwuchtmessvorrichtung errechnet und der elektronischen Robotersteuerung übermittelt.

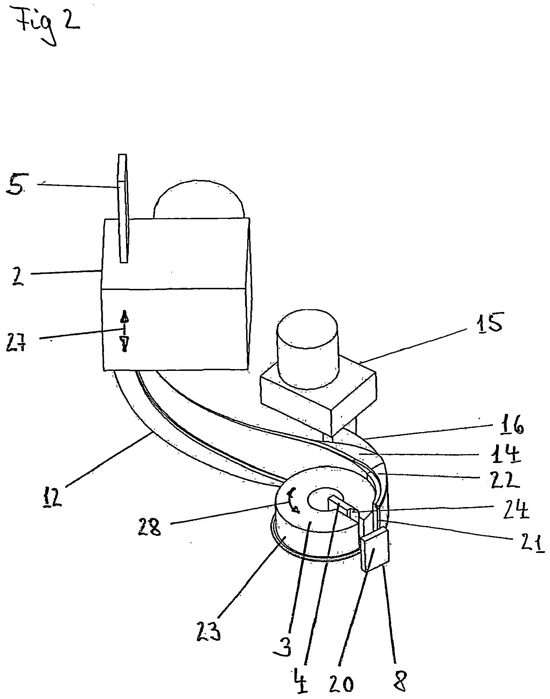

Der Ausführungsarm 10 wird dann so gesteuert, dass dessen Auswuchtkopf 1 so in die Felgeschüssel 19 eintaucht, dass er der inneren Ausgleichsfläche 17 radial beabstandet gegenübersteht. Dabei enthält der Auswuchtkopf 1 eine Zuführvorrichtung 2 mit einer Zuführkulisse 12, eine Andruckvorrichtung mit einer Aufwalzrolle 3 und einer Ablängvorrichtung 4 die schematisch im einzelnen in Fig. 2 der Zeichnung dargestellt sind. Über einen Zuführschlauch 13 wird der Zuführvorrichtung 2 ein Endlosgewichtsstrang 5 zugeführt, der vorzugsweise am Handhabungsgerät 9 einer aufgewickelten Rolle von Klebegewichtselementen entnommen wird. Derartige flexible Endlosgewichtsstränge mit aufklebbaren Ausgleichsgewichtselementen sind aus der DE 100 08 393 A1 bekannt, dessen einzelne Gewichtselemente in einem Band aus thermoplastischen Kunststoff eingeschweißt sind.
Dabei sind in den Gewichtsstrang einzelne abtrennbare Elemente aneinander gereiht, dessen abtrennbare Anzahl das Ausgleichsgewicht bestimmt. Der Endlosgewichtsstrang ist etwa 15 bis 25 mm breit und weist auf einer Trägerschicht eine Selbstklebeschicht 20 auf, die durch eine Abdeckfolie 16 geschützt ist.

Derzeit sind auch Endlosgewichtsstränge 5 der Fa. 3M bekannt, bei denen in einem rechteckigen Kunststoffband von einer Breite von etwa 15 bis 25 mm und einer Dicke von etwa 3 bis 6 mm ein Metallpulver hoher Dichte, vorzugsweise Edelstahlpulver, eingebettet ist. Der Endlosgewichtsstrang ist in sich flexibel und besteht aus ca. 65 bis 68% Metallpulver großer Dichte und einen plastisch verformbaren Kunststoff. Dabei ist eine flache Seite des Strangs mit einer Selbstklebeschicht 20 versehen, die von einer Schutzfolie 16 abgedeckt ist. Dieses kunststoffumhüllte Endlosgewichtsband 5 besitzt ein genau vorgegebenes Gewicht pro Läge und ist auf jeden beliebigen Gewichtswert vorkommender Ausgleichsgewichte 8 abschneidbar und eignet sich daher auch zum Auswuchten von Fahrzeugrädern.

Der Endlosgewichtsstrang 5 wird zunächst in die am Auswuchtkopf 1 befestigte Zuführvorrichtung 2 eingefädelt, in der vorzugsweise zwei angetriebene Andruckrollen vorgesehen sind, zwischen denen der Endlosgewichtsstrang 5 hindurch läuft. Dabei wird der Antrieb programmgesteuert bewegt, wobei die Bewegungsrichtung 27 in Vorschub- und Rückzugsrichtung steuerbar ist. Hat die Unwuchtmessvorrichtung einen bestimmten Gewichtswert für die vorgegebenen Ausgleichsebenen 18 ermittelt, wo wird in dieser oder einer separaten Auswertevorrichtung daraus ein vorgegebener Ablängwert des Endlosgewichtsstrangs 5 errechnet und die Zuführvorrichtung 2 so gesteuert, dass sie den Endlosgewichtsstrang 5 um diesen errechneten Längenwert der Ablängvorrichtung 4 zuführt. Dabei schiebt sich der Endlosgewichtsstrang 5 an einer speziell ausgebildeten Zuführkulisse 12 entlang zur Andruck- und Abtrennvorrichtung.

Die Zuführkulisse 12 ist dabei so ausgebildet, dass sie den Endlosgewichtsstrang 5 an einer gekrümmten radialen Innenwand so vorbeiführt, dass der vertikal vorgeschobene Endlosgewichtsstrang 5 in eine horizontale Andruckebene umgelenkt wird. Dabei besteht die Zuführkulisse 12 aus einem flachen Blech- oder Flachstahlelement, das wie eine Hohlbahn 14 und wie ein langgestrecktes halbes Gewindeelement gebogen ist, und sich unten in einer horizontalen Andruckebene an eine Aufwalzrolle 3 anlehnt. Dabei ist die Zuführkulisse 12 radial gebogen, und in ihrem unteren Endbereich an die Form der nachfolgenden Aufwalzrolle 3 der Andruckvorrichtung in einer Teilkreisrundung 22 angepasst. Die Führungskulisse 12 ist mit ihrer Hohlbahn 14 an einer Aufwickelvorrichtung 15 befestigt, die wiederum am Auswuchtkopf 1 angeordnet ist. Am abgerundeten verjüngenden Ende der Zuführkulisse 12 wird die Schutzfolie 16 von der Klebeschicht 20 über dessen abgerundete Nase 21 oder eine Umlenkrolle zurückgeführt und auf einer programmgesteuerten Rolle der Aufwickelvorrichtung 15 aufgewickelt. Dabei wird die Aufwickelvorrichtung 15 synchron mit der Zuführvorrichtung 12 gesteuert. Die Schutzfolie 16 könnte aber auch durch eine Saugvorrichtung abgesaugt werden.

Ist das Endlosgewichtsband 5 um den errechneten Ausgleichsgewichtswert vorgeschoben und von der Schutzfolie 16 befreit, wird es automatisch von der Ablängvorrichtung 4 abgetrennt. Dazu wird der als Ausgleichsgewicht 8 vorgesehene Teil des Endlosgewichtsstrangs 5 am Ende der Zuführkulisse 12 zwischen dieser und einer gummibeschichteten Aufwalzrolle 3 leicht eingeklemmt, so dass es von der Aufwalzrolle 3 in beide Drehrichtungen 28 bewegbar ist. Die Aufwalzrolle 3 ist mit einem gesteuerten Antrieb verbunden, der diese vor und zurück bewegen kann.

In der Aufwalzrolle 3 ist vorzugsweise die Ablängvorrichtung 4 integriert, die im wesentlichen aus einem Schneidmesser 24 besteht, dass quer zum vorbeilaufenden Endlosgewichtsstrang 5 angeordnet ist und durch die Aufwalzrolle 3 in die vorgesehene Abtrennposition gebracht werden kann. Die Aufwalzrolle 3 wird ebenfalls durch die programmgesteuerte Steuerung in der separaten Auswertevorrichtung oder in der Unwuchtmessvorrichtung bzw. der Auswuchtmaschine synchron zur Zuführvorrichtung 2 verdreht, so dass der Endlosgewichtsstrang 5 von der Zuführvorrichtung 2 über die Zuführkulisse 12 bis zur Ablängvorrichtung 4 in einem kontinuierlichen Vorschubprozess bewegt wird.

In der Aufwalzrolle 3 ist das Schneidmesser 24 in einer radialen Nut der Aufwalzrolle 3 radial verschiebbar angeordnet und kann durch die Aufwalzrolle 3 in die vorgesehene Abtrennposition gebracht werden. Durch eine leicht konische axial verschiebbare Antriebsachse in der Aufwalzrolle 3 ist das Schneidmesser 24 radial bewegbar, um den Endlosgewichtsstrang 5 abzutrennen. Dabei ist in der Zuführkulisse 12 an einer bestimmten Schneidposition, vorzugsweise in der Teilkreisrundung 22, eine Quernut vorgesehen, die ein Durchtrennen der Schutzfolie 16 verhindert und beim Abtrennvorgang dem Schneidmesser 24 gegenüberliegt. Der Endlosgewichtsstrang 5 wird dabei entsprechend dem vorgegebenen Ausgleichsgewichtswert 8 vorgeschoben, so dass er nur noch mit einem geringen Führungsbereich zwischen der Führungskulisse 12 und der Aufwalzrolle 3 eingeklemmt ist, bei der sich das Schneidmesser 24 genau in der Abtrennposition befindet und den vorgesehenen Ausgleichsgewichtsabschnitt als Ausgleichsgewicht 8 durch eine Radialbewegung des Schneidmessers 24 abtrennt.

Gleichzeitig wird die Aufwalzrolle 3 mit der freigelegten Klebefläche 20 des Ausgleichsgewichtsabschnitts 8 durch die Steuerung des Auswuchtkopfes 1 auf die vorgesehene Ausgleichsfläche 17 in der Scheibenrad- bzw. Felgenschüssel aufgedrückt und durch eine koordinierte Drehbewegung mit der Aufwalzrolle 3 auf die Ausgleichsfläche 17 aufgewalzt. Durch die koordinierten Bewegungsabläufe zwischen dem Auswuchtkopf 1, der Zuführvorrichtung 2, der Aufwickelvorrichtung 15, der Aufwalzrolle 3 und der Ablängvorrichtung 4 ist die selbsttätige Befestigung der Ausgleichsabschnitte als Ausgleichgewichte 8 an der konkaven Innenwand der Felgenschüssel 19 bei praktischen Versuchen in Taktzeiten von 5 bis 8 Sekunden erfolgreich getestet worden. Ein derartiges vollautomatisches Auswuchtverfahren ist auch mit einem Endlosgewichtsstrang 5 mit gestuften Gewichtseinlagen in einer Kunststoffumhüllung wie nach der DE 100 08 393 A1 möglich, wobei dann auf vorgegebene Längenabschnitte abgetrennt werden muss. Eine derartige vollautomatische Auswuchtung von Fahrzeugrädern ist auch bei einer vertikalen Radstellung möglich, wobei der Auswuchtkopf 1 dann horizontal in die Felgenschüssel 19 eintaucht. Das Fahrzeugrad kann auch gleichzeitig programmgesteuert in die ermittelte Winkellage eingedreht werden.

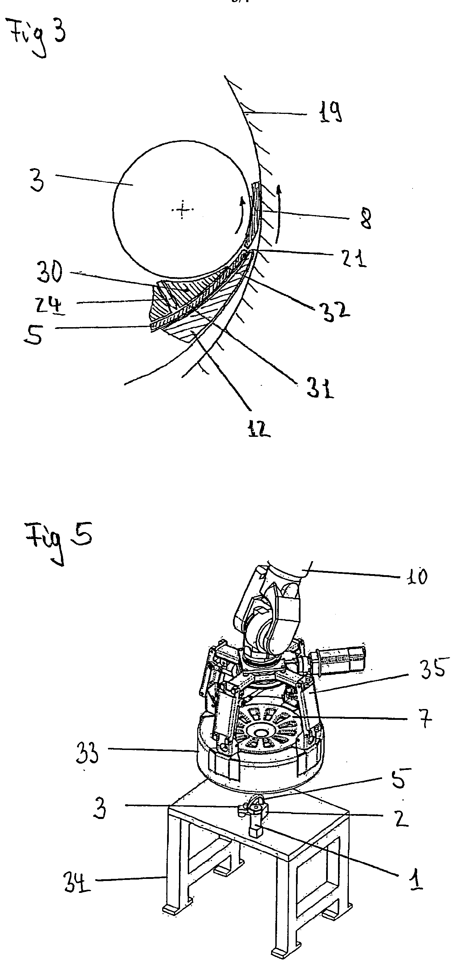

Die Ablängvorrichtung 4 kann auch außerhalb der Aufwalzrolle 3 vorgesehen sein. Eine derartige besondere Ausführung ist in Fig. 3 der Zeichnung schematisch dargestellt, wo die Ablängvorrichtung 4 zwischen der Zuführkulisse 12 und der Aufwalzrolle 3 angeordnet ist. Dazu besitzt die Ablängvorrichtung 4 eine separate Messerhalterung 30, in der das Schneidmesser 24 gelagert ist. Die Messerhalterung 30 ist etwa keilförmig ausgebildet und erstreckt sich in einem Spalt zwischen der Zuführkulisse 12 und der Aufwalzrolle 3. Dabei enthält die Messerhalterung 30 gegenüber der Zuführkulisse 12 eine von dieser beabstandete Führungswand 31, an der der Endlosgewichtsstrang 5 zur Andruckwalze 3 geführt wird. Diese Führungswand 31 endet in Vorschubrichtung vor der Nase 21 der Zuführkulisse 12, so dass die Aufwalzrolle 3 in diesem Bereich mit dem abgelängten Ausgleichsgewicht 8 in Eingriff gebracht werden kann. In einem vorgesehenen Abstand zur Spitze 32 der Führungswand 31 ist in der Messerhalterung 30 rechtwinklig zum Endlosgewichtsstrang 5 eine radiale Nut vorgesehen, in der das Schneidmesser 24 radial verschiebbar angeordnet ist. Der Abtrennvorgang und das anschließende Ankleben der abgelengten Ausgleichsgewichte 8 an der konkaven Innenwand der Felgenschüssel 19 erfolgt wie bereits vorstehend zu Fig. 1 und Fig. 2 der Zeichnung beschrieben.

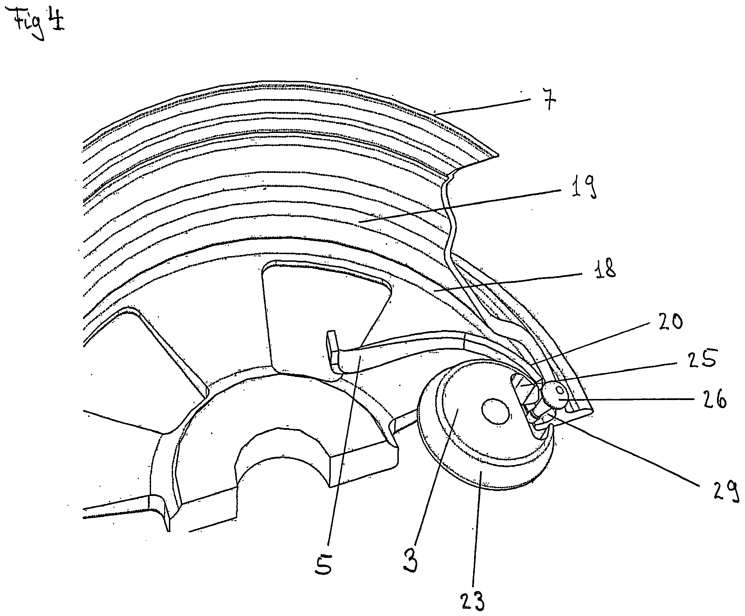

Ein derartiges vollautomatisches Auswuchten von Fahrzeugrädern mit Klebegewichten ist auch bei Scheibenrädern 7 mit einem sogenannten Hinterschnitt 29 möglich. Ein spezielles Ausführungsbeispiel dieser Vorrichtung ist in Fig. 4 der Zeichnung dargestellt. Aus Gewichtsgründen werden derzeit häufig Leichmetallfelgen 7 bzw. Scheibenräder mit Hinterschnitt 29 eingesetzt bei dem vor dem Speichenstumpf eine hintere Materialringfläche abgedreht wird, wobei die Ausgleichsgewichte 8 vorzugsweise in diese Hinterschnittringfläche 29 eingesetzt werden sollen. Dazu ist die Aufwalzrolle 3 mit einer konischen Aufwalzfläche an der äußeren Mantelfläche 23 versehen, so dass diese Hinterschnittringfläche 29 auch durch einen tangentialen Aufwalzvorgang erreichbar ist. Allerdings sind in diesen Hinterschnittringflächen 29 auch häufig die Ventilsitze 26 angeordnet, die ein Auswuchten an dieser Stelle erschweren. Man könnte dies durch zwei symmetrisch zum Ventil 26 beabstandet angeordnete Ausgleichsgewichte 8 erreichen, was aber häufig nicht gewünscht wird. Deshalb hat die Erfindung eine Aufwalzrolle 3 mit einer Ventilaussparung 25 vorgesehen, mit der über den Ventilsitz 26 aufgewalzt werden kann und zwar ein- oder zweiseitig bis dicht an den Ventilkörper heran. Bei dieser Ausführung wird vorzugsweise eine Ablängvorrichtung 4 vorgesehen, bei der das Schneidmesser 24 in einer separaten Messerhalterung 30 vor der Aufwalzrolle 3 wie nach Fig. 3 der Zeichnung gelagert ist.

Bei einer bevorzugten Ausführungsform ist dabei vorgesehen, die Endlosgewichtsstränge 5 der Aufwalzrolle 3 von beiden tangentialen Seiten zuzuführen. Hierzu wären dann zwei separate Zuführvorrichtungen 2 und Ablängvorrichtungen 4 nötig, so dass vorteilhafterweise auch ein längerer Vorrat an Endlosgewichtsmaterial 5 zur Verfügung steht, so dass die Unterbrechungszeiten bei notwendigen Gewichtsstrangnachfüllungen verkürzt werden.

Bei einer weiteren besonderen Ausführungsart kann der Auswuchtkopf 1 mit seiner Zuführvorrichtung 2, seiner Ablängvorrichtung 4 und seiner Aufwalzrolle 3 auch stationär an einem Maschinengestell 34 angeordnet sein. Dabei wird dann das Fahrzeugrad 33 mit seiner Felgenschüssel 19 durch einen Ausführungsarm 10 einer nicht dargestellten programmgesteuerten Handhabungsvorrichtung über den stationären Auswuchtkopf 1 gestülpt und synchron zum Auswuchtkopf 1 gesteuert. Eine derartige Ausführungsart ist in Fig. 5 der Zeichnung schematisch dargestellt. Dabei ist innerhalb der Radzuführlinie ein stationäres Maschinengestell 34 vorgesehen, auf dessen horizontaler Platte der stationäre Auswuchtkopf 1 befestigt ist. Der Auswuchtkopf 1 enthält eine Zuführvorrichtung 2, die den Endlosgewichtsstrang 5 von unten über eine Zuführkulisse 12 entlang einer Ablängvorrichtung 4 zur Aufwalzrolle 3 führt. Der Auswuchtkopf 1 kann wie in Fig. 2 bis Fig. 4 der Zeichnung dargestellt und in den dazu beschriebenen Ausführungen ausgebildet sein.

Zum Auswuchten wird dabei das Fahrzeugrad 33 mit seiner Felgenschüssel 19 über den Auswuchtkopf 1 gestülpt. Dazu wird das Fahrzeugrad 33 zunächst durch eine spezielle Greifvorrichtung 35 entlang seiner Lauffläche erfasst und in horizontaler Ausrichtung mit der offenen Felgenschüssel vorzugsweise von oben über den vertikal ausgerichteten Auswuchtkopf 1 gestülpt. Der Ausführungsarm 10 der nicht dargestellten Handhabungsvorrichtung wird dabei mit Hilfe der Unwuchtmessdaten vertikal in die vorgesehene erste Ausgleichsebene gesteuert. Dann wird das Fahrzeugrad 33 soweit um seine Drehachse verdreht, bis die ermittelte Ausgleichswinkellage der Ausgleichsstelle in der zugeordneten ersten Ausgleichsebene dem Auswuchtkopf 1 gegenübersteht. Eine derartige Steuerung kann mit vielen programmgesteuerten Handhabungsvorrichtungen 9 in bekannter Art ausgeführt werden. Gleichzeitig dazu wird der Endlosgewichtsstrang 5 in ermittelter Länge im Auswuchtkopf 1 der Aufwalzrolle 3 zugeführt, abgelängt, von der Schutzfolie befreit und durch eine Radialbewegung des Ausführungsarms 10 auf den Anfang der Ausgleichsfläche an der Innenwand der Felgenschüssel 19 angedrückt. Es ist aber auch denkbar, den Auswuchtkopf 1 so auszuführen, dass dessen Aufwalzrolle 3 eine Radialbewegung ausführt, durch die das abgelängte Ausgleichsgewicht auf den Anfang der Ausgleichsfläche aufgedrückt wird. Nachfolgend wird dann sowohl das Fahrzeugrad 33 als auch die Aufwalzrolle 3 synchron so weit gedreht, bis das Ausgleichsgewicht vollständig auf der Ausgleichsfläche aufgeklebt ist.

Anschließend wird das Fahrzeugrad 33 vertikal in die zweite Ausgleichsebene gehoben oder gesenkt, um anschließend in die zweite Ausgleichswinkellage gedreht zu werden. Die Ausführung und Anklebung des zweiten Ausgleichsgewichts erfolgt dann mit den gleichen Verfahrensschritten wie zur ersten Ausgleichsebene vorstehend beschrieben. Dabei wird der gesamte Auswuchtvorgang durch einen koordinierten fortgesetzten Bewegungsablauf zwischen dem Ausführungsarm 10 mit dem Fahrzeugrad 33 und dem Auswuchtkopf 1 programmmäßig so gesteuert, dass dadurch in kürzester Zeit ein komplettes Fahrzeugrad 33 in zwei Ausgleichsebenen voll automatisch auswuchtbar ist.

## Patentansprüche

1. Verfahren zum Unwuchtausgleich von Fahrzeugrädern, bei dem mit einem Auswuchtkopf (1) Klebegewichtselemente (8) an mindestens einer ermittelten Ausgleichsfläche (17) einer Felgenschüssel (19) eines Scheibenrades (7) aufgeklebt werden, wobei die Klebegewichtselemente (8) in Form eines Endlosgewichtsstrangs (5) dem Auswuchtkopf (1) zugeführt werden, der eine Zuführvorrichtung (2) enthält, durch die der Endlosgewichtsstrang gesteuert einer nachfolgenden Aufwalzrolle (3) zugeleitet wird, durch die der Anfang des Endlosgewichtstrangs (5) auf den Anfang einer Ausgleichsfläche (17) aufgedrückt und nachfolgend aufgewalzt wird, wobei die Klebegewichtselemente (8) vor oder während dem Aufdrücken auf die Ausgleichsfläche (17) von dem Endlosgewichtsstrang (5) in einer ermittelten Länge abgetrennt werden, **dadurch gekennzeichnet, dass** der Auswuchtkopf (1) mit einem Ausführungsarm (10) einer programmgesteuerten Handhabungsvorrichtung (9) kraftschlüssig verbunden ist und so gesteuert wird, dass er die Klebegewichtselemente (8) an der Ausgleichsfläche (17) positioniert und durch eine Radialbewegung aufdrückt und durch eine anschließende tangentiale Bewegung auf der Innenwand der Felgenschüssel (19) aufwalzt, dass der Endlosgewichtsstrang (5) von extern entlang dem Ausführungsarm (10) in einem Zuführschlauch (13) der Zuführungsvorrichtung (2) zugeführt wird und vor oder während der Übergabe an die Aufwalzrolle (3) unmittelbar vor dem Aufwalzvorgang eine Schutzfolie (16) von der Klebefläche (20) entfernt wird, wobei in einer Vorschubrichtung vor der Aufwalzrolle (3) oder integriert in der Aufwalzrolle (3) eine Ablängvorrichtung (4) angeordnet ist, durch die der vorbeigeführte Endlosgewichtsstrang (5) in ermittelter Länge zu einzelnen Klebegewichtselementen (8) abgetrennt wird.

2. Verfahren nach Anspruch 1, **dadurch gekennzeichnet, dass** während einer Eintauchbewegung des Auswuchtkopfes (1) des Ausführungsarms (10) sogleich der Endlosgewichtsstrang (5) durch die Zuführvorrichtung (2) um die ermittelte Ausgleichsgewichtslänge nachgeführt und durch die Ablängvorrichtung (4) abgetrennt und gleichzeitig oder später die Schutzfolie (16) entfernt wird und anschließend die Aufwalzrolle (3) auf die Ausgleichsfläche (17) in der vorgesehenen Ausgleichsebene (18) angedrückt und tangential auf der Ausgleichsfläche (17) entsprechend dem Abrollvorgang oder Aufwalzvorgang nachgeführt wird.

3. Verfahren nach Anspruch 1 oder 2, **dadurch gekennzeichnet, dass** die Zuführvorrichtung (2) den Endlosgewichtsstrang (5) während des Eintauchvorgangs Vertikal in die horizontal ausgerichtete Felgensshüssel (19) bzw. Scheibenradschüssel bewegt, die den Endlosgewichtsstrang (5) über eine Zuführkulisse (12) durch eine schraubenförmig gewendelte Bewegung in die Horizontale umlenkt und der Aufwalzrolle (3) zugeführt wird.

4. Verfahren nach einem der Ansprüche 1 bis 3, **dadurch gekennzeichnet, dass** die Zuführvorrichtung (2) den Endlosgewichtsstrang (5) während des Eintauchvorgangs horizontal in die vertikal ausgerichtete Felgenschüssel (19) bzw. Scheibenradschüssel bewegt, die den Endlosgewichtsstrang (5) über eine Zuführkulisse (12) durch eine schraubenförmig gewendelte Bewegung in die Vertikale umlenkz und der Aufwalzrolle (3) zugeführt wird.

5. Verfahren nach einem der vorhergehenden Ansprüche, **dadurch gekennzeichnet, dass** das Unwuchtausgleichsverfahren vollautomatisch durch eine programmgesteuerte Steuerung der Handhabungsvorrichtung (9) in einem fortgesetzten Bewegungsablauf innerhalb der Felgenschüssel (19) erfolgt und von Beginn des Eintauchvorgangs bis zur Beendigung des Auswuchtvorgangs in zwei Ausgleichsebenen (18) innerhalb einer Zeitdauer von 5 bis 20 Sekunden durchgeführt wird.

6. Verfahren nach Anspruch 1 oder 2, **dadurch gekennzeichnet, dass** der Auswuchtkopf (1) stationär angeordnet ist, dem durch einen Ausführungsarm (10) einer programmgesteuerten Handhabungsvorrichtung (9) ein auszuwuchtendes Fahrzeugrad (33) zugeführt wird, wobei durch den Ausführungsarm (10) während oder nach der gesteuerten Zuführung das Fahrzeugrad (33) in die ermittelte Ausgleichswinkellage eingedreht und in einer vorbestimmten Ausgleichsebene gegenüber dem Auswuchtkopf (1) positioniert und dann in einem fortgesetzten Bewegungsablauf der Auswuchtkopf (1) mindestens durch eine gesteuerte Radialbewegung des Ausführungsarms (10) oder des Auswuchtkopfes (1) das zugeführte und abgelängte Ausgleichsgewicht (8) auf die Ausgleichsfläche aufdrückt und aufgewalzt wird.

7. Verfahren nach Anspruch 6, **dadurch gekennzeichnet, dass** das Fahrzeugrad (33) von einem Ausführungsarm (10) der Handhabungsvorrichtung (9) erfasst und horizontal mit der offenen Seite der Felgenschüssel (19) über den stationären Auswuchtkopf (1) bis in die vorgesehene Ausgleichsebene abgesenkt und anschließend in die zugehörige Ausgleichswinkellage um die Radachse so lange gedreht wird, bis der Anfang der Ausgleichsfläche der Aufwalzrolle (3) gegenübersteht.

8. Verfahren nach Anspruch 6 oder 7, **dadurch gekennzeichnet, dass** gleichzeitig zur Positionierung des Fahrzeugrade (33) der Endlosgewichtsstrang (5) in der ermittelten Länge der Aufwalzrolle (3) zugeführt und abgelängt und danach die Schutzfolie abgezogen wird, so dass nachfolgend das Fahrzeugrad (33) radial zum Auswuchtkopf (1) oder der Auswuchtkopf (1) radial zum Fahrzeugrad (33) bewegt und in synchronisierten Bewegungsvorgang das Fahrzeugrad (33) um seine Radachse und die Aufwalzrolle (3) auf der Radinnenwand gedreht wird, bis das Ausgleichsgewicht (8) auf der Ausgleichsfläche (17) aufgeklebt ist.

9. Vorrichtung zur Durchführung des Verfahrens nach einem der Ansprüche 1 bis 8, die einen Ausführungsarm (10) an einer programmgesteuerten Handhabungsvorrichtung (9) enthält und die einen Auswuchtkopf (1) aufweist mit dessen Hilfe an mindestens einer ermittelten Ausgleichsfläche (17) einer Felge (7) eines Fahrzeugrades (33) mindestens ein, Klebegewichtselement (8) anklebbar ist, **dadurch gekennzeichnet, dass** der Auswuchtkopf (1) eine Zuführvorrichtung (2) zur Zuführung eines Endlosgewichtsstrangs (5) aufklebbarer Ausgleichsgewichte (8), sowie eine Ablängvorrichtung (4) zum Abtrennen eines Ausgleichsgewichtes (8) von dem Endlosgewichtsstrang (5) und eine Aufwalzrolle (3) zur Befestigung der abgetrennten Ausgleichsgewichte (8) an der Felge (7) enthält.

10. Vorrichtung nach Anspruch 9, **dadurch gekennzeichnet, dass** die Zuführvorrichtung (2) zur Bewegung des Endlosgewichtsstrangs (5) steuerbare Vorschub- und Rückzugselemente und eine gewendelte Zuführkulisse (12) enthält, durch die der Endlosgewichtsstrang (5) der Aufwalzrolle (3) zuführbar ist.

11. Vorrichtung nach Anspruch 10 **dadurch gekennzeichnet, dass** die Zuführkulisse (12) als langgestreckte gewendelte flache Hohlbahn (14) ausgebildet ist, dessen Führungsbreite der Breite des Endlosgewichtsstrangs (5) und dessen Tiefe der Dicke des Endlosgewichtsstrangs (5) entspricht, wobei die Wendelung einen halben Gewindegang umfasst.

12. Vorrichtung nach Anspruch 10 oder 11, **dadurch gekennzeichnet, dass** die Zuführkulisse (12) an ihrem Übergabebereich zur Aufwalzrolle (3) eine abgerundete Nase (21) oder Umlenkrolle enthält, an der die Schutzfolie (16) zu einer Aufwickelvorrichtung (15) zurückführbar ist.

13. Vorrichtung nach Anspruch 12, **dadurch gekennzeichnet, dass** die am Auswuchtkopf (1) vorgesehene Aufwickelvorrichtung (15), eine gesteuerte Aufwickelrolle enthält, durch die die Schutzfolie (16) synchron der Zuführung des Endlosgesichtsstrangs (5) aufwickelbar ist.

14. Vorrichtung nach einem der Ansprüche 10 bis 13, **dadurch gekennzeichnet, dass** in der Zuführkulisse (12) im Endbereich an der Übergabe zur Aufwalzrolle (3) eine Quernut vorhanden ist, die einem Schneidmesser der Ablängvorrichtung (4) gegenübersteht.

15. Vorrichtung nach einem der Ansprüche 10 bis 14, **dadurch gekennzeichnet, dass** die Zuführkulisse (12) in ihrem Endbereich eine Teilkreisrundung (22) aufweist, die an den Durchmesser der Aufwalzrolle (3) angepasst ist und dieser gegenüber angeordnet ist.

16. Vorrichtung nach einem der Ansprüche 10 bis 15, **dadurch gekennzeichnet, dass** die Aufwalzrolle (3) mit einem gesteuerten Drehantrieb verbunden ist und eine Breite aufweist, die der Breite des Endlosgewichtsstrangs (5) entspricht und deren äußere Mantelfläche (23) zylindrisch oder kegelförmig ausgebildet ist.

17. Vorrichtung nach einem der Ansprüche 9 bis 16, **dadurch gekennzeichnet, dass** in der Aufwalzrolle (3) eine Ablängvorrichtung (4) integriert ist.

18. Vorrichtung nach Anspruch 17 **dadurch gekennzeichnet, dass** die Ablängvorrichtung (4) ein Schneidmesser (24) enthält, das in einer radialen Nut der Aufwalzrolle (3) geführt und mit einem gesteuerten Antrieb verbunden ist, durch den das Schneidmesser (24) radial vor und zurück bewegbar ist.

19. Vorrichtung nach einem der Ansprüche 9 bis 16, **dadurch gekennzeichnet, dass** zwischen der Zuführkulisse (12) und der Aufwalzrolle (3) eine Ablängvorrichtung (4) vorgesehen ist, die so ausgebildet ist, dass damit eine bestimmte Länge des Endlosgewichtsstrangs (5) rechtwinklig abtrennbar ist.

20. Vorrichtung nach Anspruch 19, **dadurch gekennzeichnet, dass** die Ablängvorrichtung (4) ein Schneidmesser (24) enthält, das in einer radialen Nut einer Messerhalterung (30) geführt und mit einem gesteuerten Antrieb verbunden ist, durch den das Schneidmesser (24) radial vor und zurück bewegbar ist.

21. Vorrichtung nach einem der Ansprüche 9 bis 20 **dadurch gekennzeichnet, dass** die Aufwalzrolle (3) in ihrer äußeren Mantelfläche (23) eine Ventilaussparung (25) aufweist, die so ausgebildet ist, dass damit die Ausgleichsgewichte (8) ein- oder beidseitig bis an den Ventilsitz (26) aufwalzbar sind.

22. Vorrichtung nach Anspruch 21, **dadurch gekennzeichnet, dass** die Aufwalzrolle (3) mit zwei Zuführvorrichtungen (2) verbunden ist, wobei jede Zuführvorrichtung (2) eine separate Zuführkulisse (12) aufweist, die jeweils an eine der beiden Seiten der Ventilaussparung (25) den Endlosgewichtsstrang (5) zum Andruckvorgang heranführt.

23. Vorrichtung nach einem der Ansprüche 9 bis 22, **dadurch gekennzeichnet, dass** am Ende des Ausführungsarms (10) der Auswuchtkopf (1) angeordnet ist.

24. Vorrichtung nach einem der Ansprüche 9 bis 22, **dadurch gekennzeichnet, dass** der Auswuchtkopf stationär an einem Maschinengestell (34) angeordnet ist, wobei der Ausführungsarm (10) eine Greifervorrichtung (35) aufweist, die zur Positionierung des Fahrzeugrades (33) mit seiner offenen Felgenschüssel (19) über den Auswuchtkopf (1) dient.

## Claims

1. Method for the unbalance compensation of vehicle wheels, in which adhesive weight elements (8) are glued onto at least one determined compensation surface (17) of a wheel rim bowl (19) of a disk wheel (7) with a balancing head (1), wherein the adhesive weight elements (8) in the form of an endless weight strand (5) are supplied to the balancing head (1), which includes a feed device (2), by which the endless weight strand is supplied in a controlled manner to a following roll-on roller (3), by which the beginning of the endless weight strand (5) is pressed onto the beginning of a compensation surface (17) and thereafter is rolled-on, whereby the adhesive weight elements (8) are cut-off from the endless weight strand (5) in a determined length before or during the pressing-on onto the compensation surface (17), **characterized in that** the balancing head (1) is connected in a frictionally force-transmitting manner with an execution arm (10) of a program-controlled handling device (9) and is controlled so that it positions the adhesive weight elements (8) on the compensation surface (17) and presses the adhesive weight elements on by a radial motion and by a subsequent tangential motion rolls the adhesive weight elements on to the inner wall of the wheel rim bowl (19), that the endless weight strand (5) is supplied externally along the execution arm (10) in a feed hose (13) of the feed device (2), and a protective film (16) is removed from the adhesive surface (20) before or during the transfer to the roll-on roller (3) directly before the roll-on process, wherein a length cut-off device (4) is provided in the feed advance direction before the roll-on roller (3) or integrated in the roll-on roller (3), by which length cut-off device the endless weight strand (5), which is guided past, is cut-off in the determined length to individual adhesive weight elements (8).

2. Method according to claim 1, **characterized in that** during the reaching-in motion of the balancing head (1) of the execution arm (10), immediately the endless weight strand (5) is followingly advanced by the feed device (2) by the determined compensation weight length and is cut-off by the length cut-off device (4), and simultaneously or later the protective film (16) is removed, and thereafter the roll-on roller (3) is pressed onto the compensation surface (17) in the provided compensation plane (18) and is tangentially followingly guided along the compensation surface (17) corresponding to the roll-off process or roll-on process.

3. Method according to claim 1 or 2, **characterised in that** during the reaching-in process, the feed device (2) moves the endless weight strand (5) vertically into the horizontally oriented wheel rim bowl (19) or disk wheel bowl, which deflects the endless weight strand (5) via a feed slide channel (12) by a screw-shaped spiraled motion into the horizontal plane, and is fed to the roll-on roller (3).

4. Method according to one of the claims 1 to 4, **characterized in that** during the reaching-in process, the feed device (2) moves the endless weight strand (5) horizontally into the vertically oriented wheel rim bowl (19) or disk wheel bowl, which deflects the endless weight strand (5) via a feed slide channel (12) by a screw-shaped spiraled motion into the vertical plane, and is fed to the roll-on roller (3).

5. Method according one of the preceding claims, **characterized in that** the unbalance compensation method is carried out completely automatically by a program-controlled control of the handling device (9) in a proceeding motion sequence within the wheel rim bowl (19) and within a time duration from 5 to 20 seconds from the beginning of the reaching-in process until the end of the balancing process in two compensation planes (18).

6. Method according to claim 1 or 2, **characterized in that** the balancing head (1) is arranged stationarily, to which a vehicle wheel (33) to be balanced is supplied by an execution arm (10) of a program-controlled handling device (9), whereby by the execution arm (10) during or after the controlled supply, the vehicle wheel (33) is turned to the determined compensation angle position and is positioned in a predetermined compensation plane relative to the balancing head (1), and then in a proceeding motion sequence the balancing head (1), at least by a controlled radial motion of the execution arm (10) or of the balancing head (1), the supplied and cut-to-length compensation weight (8) is pressed and rolled-on onto the compensation surface.

7. Method according to claim 6, **characterized in that** the vehicle wheel (33) is grasped by an execution arm (10) of the handling device (9) and is lowered horizontally with the open side of the wheel rim bowl (19) over the stationary balancing head (1) into the provided compensation plane, and then is turned into the associated compensation angle position about the wheel axis so long until the beginning of the compensation surface is located opposite the roll-on roller (3).

8. Method according to Claim 6 or 7, **characterized in that**, simultaneously to the positioning of the vehicle wheel (33), the endless weight strand (5) in the determined length is supplied to the roll-on roller (3) and is cut-off to length and thereafter the protective film is pulled off, so that thereafter the vehicle wheel (33) is moved radially to the balancing head (1) or the balancing head (1) is moved radially to the vehicle wheel (33) and in synchronized motion process the vehicle wheel (33) is turned about its wheel axis and the roll-on roller (3) is turned on the wheel inner wall, until the compensating weight (8) is adhesively bonded onto the compensation surface (17).

9. Apparatus for carrying out the method according to one of the Claims 1 to 8, which includes an execution arm (10) on a program-controlled handling device (9), and which comprises a balancing head (1) with the aid of which at least one adhesive weight element (8) can be adhesively bonded on at least one determined compensation surface (17) of a wheel rim (7) of a vehicle wheel (33), **characterized in that** the balancing head (1) includes a feed device (2) for feeding an endless weight strand (5) of adhesive compensation weights (8), as well as a length cut-off device (4) for separating a compensation weight (8) from the endless weight strand (5), and a roll-on roller (3) for the securing of the separated compensation weights (8) on the wheel rim (7).

10. Apparatus according to claim 9, **characterized in that** the feed device (2) includes controllable feed advance and return stroke elements for the movement of the endless weight strand (5) and a spiraled feed slide channel (12), through which the endless weight strand (5) can be supplied to the roll-on roller (3).

11. Apparatus accoring to claim 10, **characterized in that** the feed slide channel (12) is embodied as a longitudinally extended spiraled flat hollow track (14), of which the guide width corresponds to the width of the endless weight strand (5) and the depth of which corresponds to the thickness of the endless weight strand (5), whereby the spiraling encompasses one half thread course.

12. Apparatus according to claim 10 or 11, **characterized in that** the feed slide channel (12) includes a rounded-off nose (21) or deflection roller on its transfer area to the roll-on roller (3), on which nose or deflection roller the protective film (16) is guidable back to a roll-up device (15).

13. Apparatus according to claim 12, **characterized in that** the roll-up device (15) provided on the balancing head (1) includes a controlled roll-up roller by which the protective film (16) can be rolled-up synchronously to the supplying of the endless weight strand (5).

14. Apparatus according to one of the claims 10 to 13, **characterized in that** a transverse groove is provided in the feed slide channel (12) in the end region at the transfer to the roll-on roller (3), which the transverse groove is located opposite a cutting knife of the length cut-off device (4).

15. Apparatus according to one of the claims 10 to 14, **characterized in that** the feed slide channel (12) comprises a partial circular curve (22) in its end region, which is matched to the diameter of the roll-on roller (3) and is arranged opposite this roll-on roller.

16. Apparatus according to one of the claims 10 to 15, **characterized in that** the roll-on roller (3) is connected with a controlled rotation drive and comprises a width that corresponds to the width of the endless weight strand (5) and of which the outer circumferential surface (23) is embodied cylindrical or cone-shaped.

17. Apparatus according to one of the claims 9 to 16, **characterized in that** a length cut-off device (4) is integrated in the roll-on roller (3).

18. Apparatus according to claim 17, **characterized in that** the length cut-off device (4) includes a cutting knife (24) which is guided in a radial groove of the roll-on roller (3) and is connected with a controlled drive, by which the cutting knife (24) is radially movable forwards and backwards.

19. Apparatus according to one of the claims 9 to 16, **characterized in that** a length cut-off device (4) is provided between the feed slide channel (12) and the roll-on roller (3), and the length cut-off device is embodied so that therewith a certain length of the endless weight strand (5) can be cut-off at a right angle.

20. Apparatus according to claim 19, **characterized in that** the length cut-off device (4) includes a cutting knife (24), which is guided in a radial groove of a knife holder (30) and is connected with a controlled drive, by which the cutting knife (24) is radially movable forwards and backwards.

21. Apparatus according to one of the claims 9 to 20, **characterized in that** the roll-on roller (3) comprises a valve recess (25) in its outer circumferential surface (23), which valve recess is embodied so that therewith the compensation weights (8) can be rolled-on up to the valve stem (26) on one or both sides.

22. Apparatus according to Claim 21, **characterized in that** the roll-on roller (3) is connected with two feed devices (2), whereby each feed device (2) comprises a separate feed slide channel (12), which each respectively feed-in the endless weight strand (5) for the press-on process on one of the two sides of the valve recess (25).

23. Apparatus according to one of the claims 9 to 22, **characterized in that** the balancing head (1) is arranged on the end of the execution arm (10).

24. Apparatus according to one of the claims 9 to 22, **characterized in that** the balancing head is arranged stationarily on a machine frame (34), whereby the execution arm (10) comprises a grasping device (35), which serves for the positioning of the vehicle wheel (33) with its open wheel rim bowl (19) over the balancing head (1).

## Revendications

1. Procédé pour compenser un déséquilibre des roues d'un véhicule, selon lequel des masselottes adhésives (8) sont collées sur au moins une surface de compensation (17) déterminée d'un voile de jante (19) d'une roue pleine (7) au moyen d'une tête d'équilibrage (1), les masselottes adhésives (8) étant acheminées à la tête d'équilibrage (1) sous la forme d'une bande continue (5) de masselottes, laquelle tête d'équilibrage contient un dispositif d'acheminement (2) au moyen duquel la bande continue de masselottes est amenée de manière commandée à un rouleau d'application (3) placé en aval et au moyen duquel l'extrémité avant de la bande continue de masselottes (5) est pressée sur l'extrémité avant d'une surface de compensation (17) puis appliquée, les masselottes adhésives (8) étant coupées de la bande continue de masselottes (5) à une longueur déterminée avant d'être pressées ou pendant qu'elles sont pressées sur la surface de compensation (17), **caractérisé en ce que** la tête d'équilibrage (1) est reliée à force à un bras d'exécution (10) d'un dispositif de manipulation (9) commandé par programme et elle est commandée de telle sorte qu'elle positionne les masselottes adhésives (8) sur la surface de compensation (17) et les presse par un mouvement radial et les applique sur la paroi intérieure du voile de jante (19) par un mouvement tangentiel consécutif, **en ce que** la bande continue de masselottes (5) est acheminée depuis l'extérieur le long du bras d'exécution (10) dans un tuyau d'acheminement (13) du dispositif d'acheminement (2) et une feuille protectrice (16) est retirée de la surface adhésive (20) avant ou pendant le transfert sur le rouleau d'application (3) directement avant la procédure d'application, un dispositif de mise à longueur (4), au moyen duquel la bande continue (5) de masselottes passant devant est coupée à longueur déterminée en différentes masselottes adhésives (8), étant disposé devant le rouleau d'application (3), considéré dans une direction d'avancement, ou intégré dans le rouleau d'application (3).

2. Procédé selon la revendication 1, **caractérisé en ce que** pendant un mouvement de pénétration de la tête d'équilibrage (1) du bras d'exécution (10), la bande continue (5) de masselottes est immédiatement avancée par le dispositif d'acheminement (2) de la longueur de masselotte déterminée et elle est coupée par le dispositif de mise à longueur (4) et la feuille protectrice (16) est retirée simultanément ou ultérieurement, puis le rouleau d'application (3) est pressé sur la surface de compensation (17) dans le plan de compensation (18) prévu et il est avancé de manière tangentielle sur la surface de compensation (17) conformément à la procédure de roulement ou d'application.

3. Procédé selon la revendication 1 ou 2, **caractérisé en ce que** pendant la procédure de pénétration, le dispositif d'acheminement (2) déplace la bande continue (5) de masselottes verticalement dans le voile de jante (19) ou le voile de roue pleine orienté horizontalement, la bande continue (5) de masselottes étant déviée vers l'horizontale par l'intermédiaire d'une coulisse d'acheminement (12) suite à un mouvement hélicoïdal et amenée au rouleau d'application (3).

4. Procédé selon l'une des revendications 1 à 3 **caractérisé en ce que** pendant la procédure de pénétration, le dispositif d'acheminement (2) déplace la bande continue (5) de masselottes horizontalement dans le voile de jante (19) ou le voile de roue pleine orienté verticalement, la bande continue (5) de masselottes étant déviée vers la verticale par l'intermédiaire d'une coulisse d'acheminement (12) suite à un mouvement hélicoïdal et amenée au rouleau d'application (3).

5. Procédé selon l'une des revendications précédentes, **caractérisé en ce que** le procédé de compensation du déséquilibre est effectué de manière entièrement automatique par une commande commandée par un programme du dispositif de manipulation (9) dans une séquence de mouvements à l'intérieur du voile de jante (19), et il est réalisé dans deux plans de compensation (18) dans une durée de 5 à 20 secondes entre le début du processus de pénétration et la fin du processus de compensation du déséquilibre.

6. Procédé selon la revendication 1 ou 2, **caractérisé en ce que** la tête d'équilibrage (1) est disposée de manière stationnaire, tête à laquelle est amenée une roue de véhicule (33) devant être équilibrée par un bras d'exécution (10) d'un dispositif de manipulation (9) commandé par programme, la roue du véhicule (33) étant tournée dans la position angulaire de compensation déterminée par le bras d'exécution (10) pendant ou après l'amenée contrôlée, et est positionnée par rapport à la tête d'équilibrage (1) dans un plan de compensation prédéterminé, puis en une séquence de mouvements continue de la tête d'équilibrage (1), la masselotte (8) fournie et coupée à la longueur est appuyée et appliquée sur la surface de compensation au moins par un mouvement radial contrôlé du bras d'exécution (10) ou de la tête d'équilibrage (1).

7. Procédé selon la revendication 6, **caractérisé en ce que** la roue de véhicule (33) est saisie par un bras d'exécution (10) du dispositif de manipulation (9) et elle est abaissée horizontalement jusqu'au plan de compensation prévu avec le côté ouvert du voile de jante (19) au-dessus de la tête d'équilibrage stationnaire (1), puis elle est tournée autour de l'axe de roue dans la position angulaire de compensation appropriée jusqu'à ce que le début de la surface de compensation soit situé en face du rouleau d'application (3).

8. Procédé selon la revendication 6 ou 7, **caractérisé en ce que,** simultanément à la mise en place de la roue de véhicule (33), la bande continue (5) de masselottes est amenée à la longueur déterminée au rouleau d'application (3) et elle est coupée à la longueur, puis le film de protection est retiré de sorte qu'ensuite la roue de véhicule (33) est déplacée radialement par rapport à la tête d'équilibrage (1) ou la tête d'équilibrage (1) est déplacée radialement par rapport à la roue de véhicule (33), et dans un processus de mouvement synchronisé la roue du véhicule (33) est tournée autour de son axe de roue et le rouleau d'application (3) est tourné sur la paroi intérieure de la roue jusqu'à ce que la masselotte (8) soit collée sur la surface de compensation (17).

9. Dispositif pour la mise en oeuvre du procédé selon l'une des revendications 1 à 8, lequel comprend un bras d'exécution (10) sur un dispositif de manipulation (9) commandé par programme, et qui présente une tête d'équilibrage (1) à l'aide de laquelle au moins une masselotte adhésive (8) peut être collée sur au moins une surface de compensation (17) déterminée d'une jante (7) d'une roue de véhicule (33), **caractérisé en ce que** la tête d'équilibrage (1) comprend un dispositif d'acheminement (2) permettant d'acheminer une bande continue (5) de masselottes adhésives (8), ainsi qu'un dispositif de mise à longueur (4) permettant de couper une masselotte d'équilibrage (8) de la bande continue (5) de masselottes et un rouleau d'application (3) pour fixer les masselottes d'équilibrage (8) coupées sur la jante (7).

10. Dispositif selon la revendication 9, **caractérisé en ce que** le dispositif d'acheminement (2) permettant d'acheminer la bande continue (5) de masselottes comprend des éléments d'avancée et de recul et une coulisse d'acheminement (12) hélicoïdale par laquelle la bande continue (5) de masselottes peut être amenée au rouleau d'application (3).

11. Dispositif selon la revendication 10, **caractérisé en ce que** la coulisse d'acheminement (12) est conçue sous la forme d'une glissière creuse (14) allongée hélicoidale dont la largeur de guidage correspond à la largeur de la bande continue (5) de masselottes et dont la profondeur correspond à l'épaisseur de la bande continue (5) de masselottes, l'hélice comprenant un demi-tour.

12. Dispositif selon la revendication 10 ou 11, **caractérisé en ce que** la coulisse d'acheminement (12), dans sa zone de transfert au rouleau d'application (3), comprend un nez arrondi (21) ou un rouleau de déviation sur lequel le film de protection (16) peut être ramené en direction d'un dispositif d'enroulement (15).

13. Dispositif selon la revendication 12, **caractérisé en ce que** le dispositif d'enroulement (15) prévu sur la tête d'équilibrage (1) comprend un rouleau d'enroulement contrôlé à l'aide duquel le film de protection (16) peut être enroulé de façon synchronisée avec l'acheminement de la bande continue (5) de masselottes.

14. Dispositif selon l'une des revendications 10 à 13, **caractérisé en ce qu'**une rainure transversale est prévue dans la coulisse d'acheminement (12), dans sa zone d'extrémité, au niveau du transfert au rouleau d'application (3), laquelle rainure transversale est disposée en face d'une lame de coupe du dispositif de coupe à la longueur (4).

15. Dispositif selon l'une des revendications 10 à 14, **caractérisé en ce que** la coulisse d'acheminement (12) comprend dans sa zone d'extrémité une courbe partielle circulaire (22) qui est adaptée au diamètre du rouleau d'application (3) et qui est disposée en face de celui-ci.

16. Dispositif selon l'une des revendications 10 à 15, **caractérisé en ce que** le rouleau d'application (3) est relié à un entraînement en rotation commandé et présente une largeur qui correspond à la largeur de la bande continue (5) de masselottes et dont l'enveloppe extérieure (23) est réalisée cylindrique ou en forme de cône.

17. Dispositif selon l'une des revendications 9 à 16, **caractérisé en ce qu'**un dispositif de coupe à la longueur (4) est intégré dans le rouleau d'application (3).

18. Dispositif selon la revendication 17, **caractérisé en ce que** le dispositif de coupe à la longueur (4) comprend une lame de coupe (24) qui est guidée dans une rainure radiale du rouleau d'application (3) et qui est reliée à un entraînement contrôlé à l'aide duquel la lame de coupe (24) peut être déplacée radialement en avant et en arrière.

19. Dispositif selon l'une des revendications 9 à 16, **caractérisé en ce qu'**un dispositif de coupe à la longueur (4) est prévu entre la coulisse d'acheminement (12) et le rouleau d'application (3), lequel dispositif de coupe à la longueur étant conçu de telle sorte qu'il est possible avec celui-ci de couper à angle droit une certaine longueur de la bande continue (5) de masselottes.

20. Dispositif selon la revendication 19, **caractérisé en ce que** le dispositif de coupe à la longueur (4) comprend une lame de coupe (24) qui est guidée dans une rainure radiale d'un porte-lame (30) et qui est reliée à un entraînement contrôlé à l'aide duquel la lame de coupe (24) peut être déplacée radialement en avant et en arrière.

21. Dispositif selon l'une des revendications 9 à 20, **caractérisé en ce que** le rouleau d'application (3) comprend dans son enveloppe extérieure (23) un évidement de soupape (25) conçu de telle sorte que les masselottes (8) peuvent être appliquées avec celui-ci d'un côté ou des deux côtés jusqu'à la tige de soupape (26).

22. Dispositif selon la revendication 21, **caractérisé en ce que** le rouleau d'application (3) est relié à deux dispositifs d'acheminement (2), chaque dispositif d'acheminement (2) comprenant une coulisse d'acheminement (12) séparée qui chacune mène la bande continue (5) de masselottes à l'un des deux côtés de l'évidement de soupape (25) pour le processus d'appui.

23. Dispositif selon l'une des revendications 9 à 22, **caractérisé en ce que la** tête d'équilibrage (1) est disposée sur l'extrémité du bras d'exécution (10).

24. Dispositif selon l'une des revendications 9 à 22, **caractérisé en ce que** la tête d'équilibrage est disposée de manière stationnaire sur un bâti de machine (34), le bras d'exécution (10) comprenant un dispositif de préhension (35) servant au positionnement de la roue de véhicule (33) avec son voile de jante (19) ouvert au-dessus de la tête d'équilibrage (1).
